# DEMANDE DE BREVET EUROPEEN

(11) **EP 1 672 002 A1**
(43) Date de publication de la demande: **21.06.2006**
(21) Numéro de dépôt: 05292624.3
(22) Date de dépôt: 09.12.2005
(51) Int. Cl.: C08G 69/00, C08L 77/00, C08K 3/00, C08K 3/34, C08K 3/36, C08K 7/22, C08K 7/26, C09C 1/30, C09D 7/12, C08K 9/00

(54) **Charges poreuses composites, procédé de préparation et utilisation**

(30) Priorité: 14.12.2004 FR 0413259
(71) Demandeur: Arkema, 92800 Puteaux (FR)
(72) Inventeur: Malet, Frédéric, 76000 Rouen (FR); Lermat, Yves, 27300 Bernay (FR)

(57) **Abrégé**

L'invention a pour objet un nouveau procédé de préparation d'une poudre composite à partir d'une charge poreuse et d'un matériau thermoplastique. L'invention vise aussi des charges poreuses composites et particulièrement des silices poreuses contenant des matériaux thermoplastiques, et leur utilisation.

## Description

### Domaine de l'invention.

La présente invention concerne le domaine des charges poreuses composites et particulièrement des silices poreuses contenant des matériaux thermoplastiques, leur procédé de préparation et leur utilisation.

### Art antérieur et problème technique.

Pour préparer des charges poreuses composites de nombreux documents citent des procédés décrivant l'ajout d'une charge (éventuellement poreuse) et sa dispersion dans un matériau thermoplastique.
Concernant les cas inverses, l'absorption de thermoplastique dans une charge poreuse, on peut citer US 3,954,678 (Dupont, 1976) qui décrit la synthèse de micro-capsules de gel de silice entouré d'une peau semi-perméable à base de polymère de type polyamide dont la synthèse du composite s'effectue par polycondensation in situ des monomères c'est à dire via un procédé de polycondensation interfacial.

US 3,421,931 (Rhodiaceta, 1969) décrit le revêtement de poudre pulvérulente avec un polyamide par un procédé de mise en solution puis précipitation.

EP 857538 décrit la synthèse de composite silices /polyamide par deux procédés, l'un dans lequel l'étape initiale d'incorporation des monomères dans la silice, s'effectue via une solution aqueuse ou hydroalcoolique, l'autre par mélange à sec et fusion des monomères solides, avant polymérisation in situ dans la charge poreuse.

Les inconvénients de ces procédés sont multiples. En effet ces procédés nécessitent de travailler généralement en plusieurs étapes et/ou dans un milieu solvant, ce qui nécessite l'élimination ultérieure du solvant.
Il est possible de travailler en milieu solide mais dans ce cas les monomères précurseurs des matériaux thermoplastiques doivent être solides à température ambiante et susceptibles d'être réduits en poudre ce qui limite le choix des matériaux thermoplastiques à utiliser.

Aucun procédé de l'art antérieur ne permet d'obtenir directement une poudre composite à partir d'un matériau thermoplastique et d'une charge poreuse.

### Résumé de l'invention.

L'invention a pour but de proposer un nouveau procédé de préparation d'une poudre composite à partir d'une charge poreuse et d'un matériau thermoplastique comprenant les étapes de :
- fourniture de la charge poreuse et du matériau thermoplastique, chacun étant sous forme de particules solides;
- agitation et chauffage du mélange à sec, à une température allant de 20°C à 300°C, de préférence de 50° à 150°C, supérieure à la température de fusion du matériau thermoplastique pour permettre l'absorption de l'élastomère dans au moins une partie du volume des pores.

Selon un mode de réalisation, la charge poreuse est une silice en poudre dont le volume de pores va de 0,5 à 5 ml/g, de préférence de 0,7 à 2 ml/g, le pouvoir d'absorption mesuré selon la norme DIN ISO 787N va de 100 à 400 ml/100g, de préférence de 150 à 300 ml/100g, et le diamètre moyen est compris dans la gamme allant de 0.5 à 150 microns, de préférence de 25 à 50 microns.

Selon une variante, le matériau thermoplastique sous forme de granules est choisi parmi les copolymères blocs styrène, les polybutadiènes, les polyoléfines, les polyuréthanes, les résines polyamides, les copolyesters, les résines (co)polyamides, les polyoléfines fonctionnelles ou non, les polyéthers, les produits sur base polydiméthylsiloxanes.

Selon une variante, le matériau thermoplastique est une résine polyamide ou une résine (co)polyamide dont le point de fusion est compris entre 90°C et 200°C.

Selon un autre mode de réalisation, le ratio des % en poids matériau thermoplastique/ charge poreuse est compris dans la gamme allant de 5/95 à 80/20, de préférence allant de 10/90 à 60/40.
Selon un mode de réalisation préféré, le ratio des % en poids matériau thermoplastique/ charge poreuse est compris dans la gamme allant de 30/70 à 60/40.

Selon un mode de réalisation du procédé, l'agitation du mélange s'effectue avec un dispositif anti-agglomération. La durée d'agitation et de chauffage est comprise entre 30 et 120 minutes.

Un autre objet de la présente invention est une poudre composite comprenant une silice poreuse dont le volume de pores va de 0,5 à 5 ml/g, de préférence de 0,7 à 2 ml/g, le pouvoir d'absorption mesuré selon la norme DIN ISO 787N va de 100 à 400 ml/100g, de préférence de 150 à 300ml/100get le diamètre moyen est compris dans la gamme allant de 25 à 50 microns, ladite silice poreuse contenant un matériau thermoplastique dans au moins une partie du volume des pores.
Selon un mode de réalisation de la poudre composite, le ratio % en poids de matériau thermoplastique/ silice est compris dans la gamme allant de 5/95 à 80/20, de préférence de 10/90 à 60/40.
Selon un mode de réalisation préféré, le ratio des % en poids matériau thermoplastique/ charge poreuse est compris dans la gamme allant de 30/70 à 60/40.

Selon une variante, le matériau thermoplastique est choisi parmi les copolymères blocs styrène, les polybutadiènes, les polyoléfines, les polyuréthanes, les résines polyamides, les copolyesters, les résines (co)polyamides, les polyoléfines fonctionnelles ou non, les polyéthers, les produits sur base polydiméthylsiloxanes.
De manière préférée, le matériau thermoplastique est une résine polyamide ou une résine (co)polyamide dont le point de fusion est compris entre 90°C et 200°C.

L'invention a également pour objet la poudre composite obtenue par le procédé décrit ci dessus.
Selon encore un autre objet, l'invention se rapporte à l'utilisation de la poudre composite selon l'invention, comme agent modifiant dans les peintures ou les produits cosmétiques, comme vecteur de substances organiques ou comme support de système de chromatographie.

### Exposé détaillé de l'invention.

Le procédé de préparation d'une poudre composite selon l'invention s'effectue de manière générale à partir d'une charge poreuse et d'un matériau thermoplastique.

Dans un premier temps on fournit la charge poreuse et le matériau thermoplastique. De préférence chacun des réactifs se présente sous forme de particules solides puis on agite et on chauffe le mélange à sec à une température supérieure à la température de fusion du matériau thermoplastique pour permettre l'absorption de l'élastomère dans au moins une partie du volume des pores de la charge poreuse.

Un tel procédé permet donc d'obtenir l'absorption d'un matériau thermoplastique dans les pores de charge poreuse en une seule étape à partir de polymères thermoplastiques déjà fabriqués.
Les avantages de ce procédé sont multiples :
- facilité de mise en oeuvre avec des matières premières commercialement disponibles ;
- pas de réaction de polymérisation in situ qui sont génératrices de sous produits et d'impuretés qui nécessiteraient d'être éliminées ;
- une réaction en milieu solide donc pas d'utilisation de solvant qui nécessiterait d'être éliminé.

Parmi les charges poreuses adaptées dans le cadre de l'invention on peut citer toute matière minérale sous forme de particule contenant un volume interne de pores.

On peut citer par exemple les systèmes de type zéolite, les silices poreuses etc....
On préfèrera tout particulièrement les systèmes poreux, notamment les silices poreuses, dont le volume de pores va de 0,5 à 5 ml/g, de préférence de 0,7 à 2 ml/g, le pouvoir d'absorption d'huile mesuré selon la norme DIN ISO 787N va de 100 à 400 ml/100g, de préférence de 150 à 300 ml/100g, et dont le diamètre moyen est dans la gamme allant de 0.5 à 150 microns, de préférence de 25 à 50 microns.
Les matériaux thermoplastiques qui occupent au moins une partie du volume des pores des poudres composites selon l'invention peuvent aussi être des matériaux thermoplastiques élastomères. Les matériaux thermoplastiques utilisés dans l'invention comprennent en général les copolymères blocs styrène, les polybutadiènes, les polyoléfines, les polyuréthanes, les résines polyamides, les copolyesters, les résines (co)polyamides, les polyoléfines fonctionnelles ou non, les polyéthers, les produits sur base polydiméthylsiloxanes.
De préférence on utilisera comme matériaux thermoplastiques les résines polyamides qui sont des copolymères à blocs polyamides et blocs polyéthers. Les copolymères à blocs polyamides et blocs polyéthers résultent de la copolycondensation de séquences polyamides à extrémités réactives avec des séquences polyéthers à extrémités réactives, telles que, entre autres :
1) Séquences polyamides à bouts de chaîne diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylène alpha-oméga dihydroxylées aliphatiques appelées polyétherdiols.
3) Séquences polyamides à bouts de chaînes dicarboxyliques avec des polyétherdiols, les produits obtenus étant, dans ce cas particulier, des polyétheresteramides. Les copolymères de l'invention sont avantageusement de ce type.
   Les séquences polyamides à bouts de chaînes dicarboxyliques proviennent par exemple de la condensation de précurseurs de polyamides en présence d'un diacide carboxylique limiteur de chaîne.
   Les séquences polyamides à bouts de chaînes diamines proviennent par exemple de la condensation de précurseurs de polyamides en présence d'une diamine limiteur de chaîne.
   Les polymères à blocs polyamides et blocs polyéthers peuvent aussi comprendre des motifs répartis de façon aléatoire. Ces polymères peuvent être préparés par la réaction simultanée du polyéther et des précurseurs des blocs polyamides.
   Par exemple, on peut faire réagir du polyétherdiol, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.
   On peut aussi faire réagir du polyétherdiamine, des précurseurs de polyamide et un diacide limiteur de chaîne. On obtient un polymère ayant essentiellement des blocs polyéthers, des blocs polyamides de longueur très variable, mais aussi les différents réactifs ayant réagi de façon aléatoire qui sont répartis de façon aléatoire (statistique) le long de la chaîne polymère.
   La quantité de blocs polyéther dans ces copolymères à blocs polyamides et blocs polyéthers est avantageusement de 10 à 70% en poids du copolymère et de préférence de 35 à 60%.
   Les blocs polyétherdiols sont soit utilisés tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne diacide pour faire les polymères à blocs polyamides et blocs polyéthers ayant des motifs répartis de façon statistique.
   La masse molaire en nombre des séquences polyamides est comprise entre 500 et 10000 et de préférence entre 500 et 4000 sauf pour les blocs polyamides du deuxième type. La masse des séquences polyéther est comprise entre 100 et 6000 et de préférence entre 200 et 3000.
   Ces polymères à blocs polyamides et blocs polyéthers qu'ils proviennent de la copolycondensation de séquences polyamides et polyéthers préparées auparavant ou d'une réaction en une étape présentent, par exemple, une viscosité intrinsèque entre 0,8 et 2,5 mesurée dans le métacrésol à 25°C pour une concentration initiale de 0,8 g/100 ml.

Les points de fusion des matériaux thermoplastiques utilisés dans le cadre de l'invention sont en général compris entre 80° et 275°C, de préférence compris entre 90°C et 200°C.
De manière générale, dans la première étape du procédé, on introduit les réactifs de départ dans un ratio exprimé en % en poids, de matériau thermoplastique/ charge poreuse qui est compris dans une gamme allant de 5/95 à 80/20, de préférence allant de 10/90 à 60/40.
Puis on agite le mélange à sec et on chauffe le mélange.

En fonction de la température de fusion du matériau thermoplastique choisi, le chauffage du mélange s'effectuera en général à une température allant de 100°C à 300°C, de préférence de 200°C à 280°C, supérieure à la température de fusion du matériau thermoplastique pour permettre l'absorption de l'élastomère dans au moins une partie du volume des pores. De ce fait, le matériau thermoplastique sera rendu suffisamment fluide pour pénétrer dans au moins une partie du volume des pores de la charge poreuse.

Selon une variante du procédé, l'agitation du mélange s'effectue avec un dispositif pour empêcher la formation d'agglomérats.
En effet lorsque le ratio % en poids de matériau thermoplastique par rapport au % en poids de charge poreuse est supérieur à 30/70 et notamment lorsque l'on cherche à diminuer la température de chauffage, il est possible d'observer au début du mélange la formation de particules de charge poreuse agglomérées.
L'utilisation d'un outil anti-agglomération adapté permet de casser les agglomérats de charge poreuse et d'obtenir une poudre composite dont la granulométrie moyenne finale reste sensiblement équivalente à la granulométrie moyenne initiale.
L'invention a également pour objet une poudre composite obtenue à partir d'une silice poreuse choisie dans une gamme de diamètre moyen allant de 25 à 50 microns.

L'utilisation de cette silice poreuse particulière dans la mise en oeuvre du procédé selon l'invention permet de diminuer le taux d'agglomération physique qui se produit en début de procédé pendant l'étape d'agitation et de chauffage du mélange des solides.
Ce choix de silice poreuse permet aussi d'obtenir une poudre composite qui incorpore de grande quantités de matériau thermoplastique pouvant notamment aller jusqu'à 60% en poids de matériau thermoplastique sans modification notable de la granulométrie moyenne de la poudre composite finale.

La présente invention a aussi pour objet diverses utilisation des poudres composites obtenues selon le procédé décrit ci dessus.
Elles peuvent être utilisées comme agent modifiant dans les peintures ou les produits cosmétiques ou bien comme vecteur de substances organiques (médicaments, insecticides) ou encore comme support de système de chromatographie.

### Exemples.

Les exemples suivants illustrent la présente invention sans toutefois en limiter la portée.
Les résultats des différents essais sont résumés dans les tableaux 1 et 2.

### Exemple 1.

Les essais sont réalisés en grand réacteur tube de verre de volume 0.51.
Le bain d'huile est régulé à une température adaptée au matériau thermoplastique choisi, c'est à dire à une température permettant la fusion du matériau thermoplastique et sa pénétration dans les pores de la silice.
Le réacteur est équipé d'une grande ancre, diamètre extérieur des pales 4.7 cm, hauteur des pales 14.5 cm, entrefer paroi pale 6 mm.
On pèse dans le réacteur la silice et le matériau thermoplastique en poudre, et on mélange à sec. La vitesse d'agitation mise en oeuvre peut atteindre 300 tr/min, voire plus.
Une fois le réacteur monté et alimenté par les réactifs on balaye à l'azote pendant 15 minutes avant la plongée dans le bain d'huile. On agite le mélange pendant le temps nécessaire à la fusion du matériau thermoplastique et à sa pénétration dans les pores de la charge poreuse.

Une fois la réaction terminée, on recueille la poudre et on effectue un tamisage pour évaluer la quantité de poudre composite de diamètre moyen inférieur ou supérieur à 0.1 mm, ce qui caractérise le taux d'agglomération physique des particules dans le procédé.

### Exemple 2.

On procède comme dans l'Exemple 1, avec une ancre moyenne diamètre extérieur des pales 4.7 cm, entrefer paroi pale 6 mm, hauteur des pales 8 cm, ceci pour permettre l'introduction d'une contre pale réalisée par une aiguille de diamètre 2 mm située entre la pale et la paroi du tube de verre. L'aiguille est tenue par un septum dans un rodage de la tête du réacteur.

La présence de l'aiguille entraîne la casse progressive des grains dans les essais où une agglomération des grains peut se former.
Le tableau 1 donne les résultats d'agglomération et de granulométrie moyenne des poudres composites obtenues en fonction des diamètres moyens des silices poreuses de départ et des taux de matériaux thermoplastiques utilisés.

**Tableau 1.**

| **N° d'essai** | 1 | 2 | 3 | 4 | 5 |
|---|---|---|---|---|---|
| **Granulométrie de la Silice (µm)** | 25-34 | 25-34 | 25-34 | 35-47 | 20 |
| **% en poids de PEBAX*** (3533) | 10 | 20 | 40 | 60 | 45 |
| **Température de chauffage en °C** | 280 | 280 | 280 | 250 | 280 |
| **Durée de chauffage et agitation en minutes** | 120 | 120 | 120 | 120 | 120 |
| **Agitation avec ou sans contre pale** | | | | avec | |
| **Tamisage ∅> 0.1 mm** % en poids | 0.5 | 1 | 6.8 | 10 | 16 |
| **Tamisage ∅<0.1 mm % en poids** | 99.5 | 99 | 93.3 | 90 | 84 |
| **D50** du composite (µm)** | Non mesuré | < 36 | 36 | 47 | -non mesuré |

| | | | | | |
|---|---|---|---|---|---|
| *résine PEBA polyéther bloc amide commercialisés par la demanderesse sous le nom de PEBAX®. Point de fusion : 155°C. | | | | | |
| **D50 diamètre moyen des particules composites obtenues. | | | | | |

On observe que les taux d'incorporation de matériau thermoplastique exprimés en % en poids introduit dans le mélange peuvent varier dans une large gamme allant notamment de 10 à 60% en poids de matériau thermoplastique.

On observe aussi que le taux d'agglomération représenté par le % en poids de poudre de diamètre moyen supérieur à 0.1 mm est plus faible avec des particules poreuses de silice de diamètre moyen initial supérieur à 20 microns (essais 1 à 4).

### Tableau 2.

Le tableau 2 donne les résultats en fonction des variations de différents paramètres utilisés dans le procédé décrit dans les exemples 1 et 2 ci dessus.

| **N° d'essai** | 6 | 7 | 8 | 9 | 10 | 11 |
|---|---|---|---|---|---|---|
| **Granulométrie de la Silice (µm)** | 32 | 32 | 32 | 32 | 32 | 32 |
| **% en poids de PLATAMID H106*** | 30 | 40 | 40 | 40 | 40 | 40 |
| **Température de chauffage en °C** | 250 | 230 | 250 | 270 | 225 | 225 |
| **Durée totale de réaction en minutes** | 40 | 60 | 60 | 60 | 70 | 110 |
| **Agitation avec ou sans contre pale** | Sans | Sans | Sans | Sans | Avec | Avec |
| **Tamisage ∅>0.1 mm % en poids** | 4.6 | 20 | 20 | 20 | 17 | 12.4 |
| **Tamisage ∅<0.1 mm % en poids** | 95.5 | 75 | 75 | 75 | 83 | 87.6 |
| ****D50 du composite (µm)** | 37 | | | | 41 | 41 |

| | | | | | | |
|---|---|---|---|---|---|---|
| *résine (co)polyamide 6/6.6/11/12 commercialisé par la demanderesse sous le nom de PLATAMID® ; point de fusion : 96°C. | | | | | | |
| **D50 diamètre moyen des particules composites obtenues. | | | | | | |

On observe dans l'essai 6 que la synthèse d'un composite silice / PEBAX (70 / 30) s'effectue par agitation simple sans contre pale à 250°C.
La synthèse d'un composite silice / PEBAX® (60 / 40) est faisable à 225° ou 230°C mais il est préférable d'utiliser un outil permettant de casser les agglomérats se formant en début de synthèse (essai 7 comparé à essai 10).
Dans tous les essais, la répartition granulométrique moyenne ne change pratiquement pas. En effet, le diamètre moyen, D50, passe de 32 microns pour la silice de départ à 37 et 41 microns pour les composites 30 et 40% en poids de PEBAX respectivement.

L'augmentation de la durée du mélange et de l'utilisation d'une contre pale permettent de diminuer le taux d'agglomération caractérisé par un léger gain de particules de diamètre inférieur à 0.1 mm (essai 11 comparé à essai 10).

## Revendications

1. Procédé de préparation d'une poudre composite à partir d'une charge poreuse et d'un matériau thermoplastique comprenant les étapes de :
- fourniture de la charge poreuse et du matériau thermoplastique, chacun étant sous forme de particules solides;
- agitation et chauffage du mélange à sec, à une température allant de 20°C à 300°C, de préférence de 50° à 150°C, supérieure à la température de fusion du matériau thermoplastique pour permettre l'absorption de l'élastomère dans au moins une partie du volume des pores.

2. Procédé selon la revendication 1 dans lequel la charge poreuse est une silice en poudre dont le volume de pores va de 0,5 à 5 ml/g, de préférence de 0,7 à 2 ml/g, le pouvoir d'absorption mesuré selon la norme DIN ISO 787N va de 100 à 400 ml/100g, de préférence de 150 à 300 ml/100g, et le diamètre moyen est compris dans la gamme allant de 0.5 à 150 microns, de préférence de 25 à 50 microns.

3. Procédé selon la revendication 1 dans lequel le matériau thermoplastique sous forme de granules est choisi parmi les copolymères blocs styrène, les polybutadiènes, les polyoléfines, les polyuréthanes, les résines polyamides, les copolyesters, les résines (co)polyamides, les polyoléfines fonctionnelles ou non, les polyéthers, les produits sur base polydiméthylsiloxanes.

4. Procédé selon la revendication 3 dans lequel le matériau thermoplastique est une résine polyamide ou une résine (co)polyamide dont le point de fusion est compris entre 90°C et 200°C.

5. Procédé selon l'une des revendications 1 à 4 dans lequel le ratio des % en poids matériau thermoplastique/charge poreuse est compris dans la gamme allant de 5/95 à 80/20, de préférence compris de 10/90 à 60/40.

6. Procédé selon la revendication 5 dans lequel le ratio des % en poids matériau thermoplastique/ charge poreuse est compris dans la gamme allant de 30/70 à 60/40.

7. Procédé selon la revendication 6 dans lequel l'agitation du mélange s'effectue avec un dispositif anti-agglomération.

8. Procédé selon l'une des revendications 1 à 7 dans lequel la durée d'agitation et de chauffage est comprise entre 30 et 120 minutes.

9. Poudre composite comprenant une silice poreuse dont le volume de pores va de 0,5 à 5 ml/g, de préférence de 0,7 à 2 ml/g, le pouvoir d'absorption mesuré selon la norme DIN ISO 787N va de 100 à 400 ml/100 g, de préférence de 150 à 300 ml/100 g et le diamètre moyen est compris dans la gamme allant de 25 à 50 microns, ladite silice poreuse contenant un matériau thermoplastique dans au moins une partie du volume des pores.

10. Poudre composite selon la revendication 9 dans laquelle le ratio % en poids de matériau thermoplastique/silice est compris dans la gamme allant de 5/95 à 80/20, de préférence de 10/90 à 60/40.

11. Poudre composite selon la revendication 10 dans lequel le ratio des % en poids matériau thermoplastique/charge poreuse est compris dans la gamme allant de 30/70 à 60/40.

12. Poudre composite selon l'une des revendication 9 à 11 dans lequel le matériau thermoplastique est choisi parmi les copolymères blocs styrène, les polybutadiènes, les polyoléfines, les polyuréthanes, les résines polyamides, les copolyesters, les résines (co)polyamides, les polyoléfines fonctionnelles ou non, les polyéthers, les produits sur base polydiméthylsiloxanes.

13. Poudre composite selon la revendication 12 dans laquelle le matériau thermoplastique est une résine polyamide ou une résine (co)polyamide dont le point de fusion est compris entre 90°C et 200°C.

14. Poudre composite obtenue par le procédé de l'une quelconque des revendications 1 à 8.

15. Utilisation de la poudre composite selon l'une quelconque des revendications 9 à 14 comme agent modifiant dans les peintures ou les produits cosmétiques, comme vecteur de substances organiques ou comme support de système de chromatographie.

## Revendications modifiées

### Revendications modifiées conformément à la règle 86(2) CBE.

**1.** Procédé de préparation d'une poudre composite à partir d'une charge poreuse et d'un matériau thermoplastique comprenant les étapes de :
- fourniture de la charge poreuse et du matériau thermoplastique, chacun étant sous forme de particules solides;
- agitation et chauffage du mélange à sec, à une température allant de 20°C à 300°C, de préférence de 50° à 150°C, supérieure à la température de fusion du matériau thermoplastique pour permettre l'absorption de l'élastomère dans au moins une partie du volume des pores.

**2.** Procédé selon la revendication 1 dans lequel la charge poreuse est une silice en poudre dont le volume de pores va de 0,5 à 5 ml/g, de préférence de 0,7 à 2 ml/g, le pouvoir d'absorption mesuré selon la norme DIN ISO 787N va de 100 à 400 ml/100g, de préférence de 150 à 300 ml/100g, et le diamètre moyen est compris dans la gamme allant de 0.5 à 150 microns, de préférence de 25 à 50 microns.

**3.** Procédé selon la revendication 1 dans lequel le matériau thermoplastique sous forme de granules est choisi parmi les copolymères blocs styrène, les polybutadiènes, les polyoléfines, les polyuréthanes, les résines polyamides, les copolyesters, les résines (co)polyamides, les polyoléfines fonctionnelles ou non, les polyéthers, les produits sur base polydiméthylsiloxanes.

**4.** Procédé selon la revendication 3 dans lequel le matériau thermoplastique est une résine polyamide ou une résine (co)polyamide dont le point de fusion est compris entre 90°C et 200°C.

**5.** Procédé selon l'une des revendications 1 à 4 dans lequel le ratio des % en poids matériau thermoplastique/charge poreuse est compris dans la gamme allant de 5/95 à 80/20, de préférence compris de 10/90 à 60/40.

**6.** Procédé selon la revendication 5 dans lequel le ratio des % en poids matériau thermoplastique/ charge poreuse est compris dans la gamme allant de 30/70 à 60/40.

**7.** Procédé selon la revendication 6 dans lequel l'agitation du mélange s'effectue avec un dispositif anti-agglomération.

**8.** Procédé selon l'une des revendications 1 à 7 dans lequel la durée d'agitation et de chauffage est comprise entre 30 et 120 minutes.

**9.** Poudre composite comprenant une silice poreuse dont le volume de pores va de 0,5 à 5 ml/g, de préférence de 0,7 à 2 ml/g, le pouvoir d'absorption mesuré selon la norme DIN ISO 787N va de 100 à 400 ml/100 g, de préférence de 150 à 300 ml/100 g et le diamètre moyen est compris dans la gamme allant de 25 à 50 microns, ladite silice poreuse contenant un matériau thermoplastique dans au moins une partie du volume des pores.

**10.** Poudre composite selon la revendication 9 dans laquelle le ratio % en poids de matériau thermoplastique/silice est compris dans la gamme allant de 5/95 à 80/20, de préférence de 10/90 à 60/40.

**11.** Poudre composite selon la revendication 10 dans lequel le ratio des % en poids matériau thermoplastique/charge poreuse est compris dans la gamme allant de 30/70 à 60/40.

**12.** Poudre composite selon l'une des revendication 9 à 11 dans lequel le matériau thermoplastique est choisi parmi les copolymères blocs styrène, les polybutadiènes, les polyoléfines, les polyuréthanes, les copolyesters, les polyoléfines fonctionnelles ou non, les polyéthers, les produits sur base polydiméthylsiloxanes.

**13.** Poudre composite obtenue par le procédé de l'une quelconque des revendications 1 à 8.

**14.** Utilisation de la poudre composite selon l'une quelconque des revendications 9 à 13 comme agent modifiant dans les peintures ou les produits cosmétiques, comme vecteur de substances organiques ou comme support de système de chromatographie.
